# DEMANDE DE BREVET EUROPEEN

(11) **EP 1 625 959 A1**
(43) Date de publication de la demande: **15.02.2006**
(21) Numéro de dépôt: 05107270.0
(22) Date de dépôt: 08.08.2005
(51) Int. Cl.: B60J 7/00, B60Q 3/02, B60Q 3/00

(54) **Dispositif d'occultation d'une surface vitrée d'un véhicule automobile, pavillon et véhicule correspondants.**

(30) Priorité: 10.08.2004 FR 0408805
(71) Demandeur: WAGON SAS, 79302 Bressuire Cédex (FR)
(72) Inventeur: Seiller, Julien M., 79300, Bressuire (FR)
(74) Mandataire: Bioret, Ludovic

(57) **Abrégé**

L'invention concerne un dispositif d'occultation d'une surface vitrée (11,12) d'un véhicule automobile. Selon l'invention, un tel dispositif d'occultation comprend une pluralité de lamelles (2) mobiles chacune en rotation entre au moins deux positions autour d'un axe parallèle à ladite lamelle, et au moins une desdites lamelles de ce dispositif d'occultation est équipée de moyens d'éclairage (24,25). De cette façon, on peut définir au moins trois types d'ambiances :
- occultation faible avec les lamelles perpendiculaire à la direction de la surface vitrée, laissant passer une grande partie de la lumière ;
- occultation forte avec les lamelles parallèles à la direction de la surface vitrée, occultant la plus grande partie de la lumière ;
- éclairage de l'habitacle à l'aide desdits moyens d'éclairage

## Description

### 1. Domaine de l'invention

Le domaine de l'invention est celui des véhicules automobiles, et plus précisément de l'occultation des surfaces vitrées de véhicules automobiles.

Le domaine de l'invention est également celui de l'éclairage, ou de « l'ambiance », à l'intérieur d'un véhicule automobile.

Plus précisément, l'invention concerne l'adaptation de l'ambiance lumineuse dans un véhicule automobile.

### 2. Solutions de l'art antérieur

Des dispositifs d'occultation sont prévus depuis longtemps pour les surfaces vitrées de véhicules. En effet, les surfaces vitrées des véhicules automobiles peuvent causer des problèmes de température à l'intérieur du véhicule, de discrétion, ou d'éblouissement.

Ces dispositifs d'occultation sont rendus encore plus nécessaires avec l'apparition des pavillons de véhicule vitrés, qui augmentent sensiblement la surface vitrée du véhicule.

Par ailleurs, des dispositifs d'éclairage existent depuis longtemps dans les véhicules automobiles. On connaît ainsi des liseuses destinées à lire les cartes routières, ou des lampes fixées par exemple au plafond du véhicule.

Il existe ainsi depuis de nombreuses années des systèmes d'éclairage classiques à l'intérieur d'un véhicule, appelés « plafonniers ». Ces systèmes, solidarisés au pavillon d'un véhicule, permettent d'éclairer l'intérieur de ce dernier, par exemple lorsque l'utilisateur enclenche un interrupteur ou lorsqu'une portière du véhicule est ouverte.

Les plafonniers sont des systèmes d'éclairage pratiques pour les automobilistes lorsque le véhicule est à l'arrêt, puisqu'ils permettent d'éclairer correctement une grande partie de l'habitacle du véhicule. Par contre, ces systèmes sont dangereux s'ils sont utilisés de nuit ou dans la pénombre, lors d'un déplacement. En effet, ces plafonniers n'étant pas dirigeables, leur éclairage peut perturber la vision du conducteur lorsqu'il conduit. Ils ne permettent donc pas au passager avant de consulter une carte routière, par exemple, sans gêner le conducteur, ou aux passagers arrière de lire un livre s'ils le souhaitent.

Par conséquent, les occupants d'un véhicule restent généralement dans la pénombre ou dans l'obscurité pour ne pas gêner le conducteur.

### 3. Inconvénients de l'art antérieur

Un inconvénient de cette technique de l'art antérieur est la difficulté d'ajuster le niveau de luminosité souhaité dans le véhicule. En particulier pour ne pas éblouir le conducteur, les passagers du véhicule sont souvent obligés de rester dans le noir.

Plus généralement, les techniques connues ne permettent pas d'adapter et modifier l'éclairage, et l'ambiance, à l'intérieur du véhicule.

### 4. Objectifs de l'invention

L'invention a notamment pour objectif de pallier ces inconvénients de l'art antérieur.

Plus précisément, un objectif de l'invention est de fournir un dispositif d'occultation permettant d'ajuster précisément le niveau de luminosité souhaité dans le véhicule.

Un autre objectif de l'invention est de mettre en oeuvre dans un véhicule un dispositif permettant de créer des ambiances lumineuses nouvelles, et modifiables, ou modulables.

Plus précisément, un objectif de l'invention est de fournir une solution améliorant le confort des passagers aussi bien lorsqu'il fait nuit, et cela sans perturber le conducteur, que lorsqu'il fait jour.

Un autre objectif de l'invention est de proposer une nouvelle approche de l'éclairage à l'intérieur d'un véhicule, qui soit esthétique, ergonomique, ludique et/ou luxueuse.

L'invention a encore pour objectif de mettre en oeuvre une solution efficace, facile à monter et peu coûteuse.

### 5. Caractéristiques essentielles de l'invention

Ces objectifs, ainsi que d'autres qui apparaîtront par la suite, sont atteints à l'aide d'un dispositif d'occultation d'une surface vitrée d'un véhicule automobile, comprenant une pluralité de lamelles dont, selon l'invention, au moins une lamelle est équipée de moyens d'éclairage.

Ainsi, l'invention repose sur une approche tout à fait nouvelle et inventive des dispositifs d'occultation qui n'ont plus pour seul rôle d'atténuer la lumière venant de l'extérieur mais également de créer des ambiances lumineuses en combinant la lumière naturelle et une lumière produite par le dispositif.

Selon un mode de réalisation particulier de l'invention, chacune des lamelles est mobiles en rotation entre au moins deux positions autour d'un axe parallèle à la lamelle, de façon à défmir au moins trois types d'ambiances :
- occultation faible avec les lamelles perpendiculaire à la direction de la surface vitrée, laissant passer une grande partie de la lumière ;
- occultation forte avec les lamelles parallèles à la direction de la surface vitrée, occultant la plus grande partie de la lumière ;

éclairage de l'habitacle à l'aide desdits moyens d'éclairage.

L'utilisateur pourra ainsi choisir parmi plusieurs combinaisons des lumières naturelles et artificielles.

De façon avantageuse, au moins une des lamelles comprend des moyens pour atténuer, répartir, diffuser, orienter, et/ou moduler la lumière produite par les moyens d'éclairage.

On peut ainsi obtenir dans le véhicule un éclairage qui peut être adapté à l'ambiance recherchée par les occupants.

Préférentiellement, les lamelles peuvent être éclairantes dans toutes leurs positions.

De cette façon, la lumière émise par les lamelles peut soit remplacer la lumière extérieure, si les lamelles occultent la surface vitrée, soit s'additionner et se combiner avec la lumière extérieure, si les lamelles sont perpendiculaires à la surface vitrée.

Selon un mode de réalisation avantageux, les moyens d'éclairage sont montés à l'intérieur de la lamelle.

De façon préférentielle, les lamelles sont au moins en partie en matériaux transparents ou translucides.

Selon un mode de réalisation particulier de l'invention, les moyens d'éclairage comprennent au moins une diode électroluminescente.

Ce moyen d'éclairage présente en effet l'avantage de consommer peu d'énergie et d'occuper peu de place.

Préférentiellement, la ou les diode(s) électroluminescente(s) sont situées à au moins une extrémité d'au moins une lamelle.

Selon une caractéristique particulière de l'invention, au moins une lamelle inclus un tube transparent destiné à conduire la lumière le long de la lamelle.

La lumière produite par la diode électroluminescente sera alors répartie tout le long de la lamelle, selon principe de la fibre optique. La lamelle tout entière pourra donc être éclairante.

Selon un autre mode de mise en oeuvre de l'invention, les moyens d'éclairage comprennent au moins un tube d'éclairage au néon, inclus dans au moins une partie de la longueur de la lamelle.

Les tube d'éclairage au néon pouvant prendre des formes et des dimensions très variées, cette solution peut également permettre que toute la lamelle soit éclairante.

Avantageusement, la lamelle et/ou le tube transparent présentent des stries, dirigeant une partie de la lumière sensiblement perpendiculairement à l'axe de la lamelle.

Ainsi, quand la lumière est conduite par un tube transparent, une partie de cette lumière peut être détournée par les stries, et être ainsi réorientée perpendiculairement à la lamelle.

De façon préférentielle, le dispositif peut prendre au moins deux positions, une position repliée et une position déployée.

Avantageusement, un logement de rangement est prévu pour cacher les lamelles dans ladite position repliée.

Ainsi, la surface vitrée pourra être entièrement dégagée.

Selon un mode de réalisation avantageux de l'invention, chacune des deux faces d'au moins une des lamelles transmettent ou réfléchissent différemment la lumière des moyens d'éclairages, grâce à des états de surface différents.

Selon une approche préférentielle, les états de surface différents incluent une coloration différente de chacune des faces interne et /ou externe de la lamelle, de façon à colorer la lumière transmise.

Préférentiellement, les états de surface différents incluent une quantité différente de stries sur les deux surfaces de la lamelle, ou une disposition différente de ces stries.

Il sera ainsi possible de faire des jeux de lumière originaux.

Selon une caractéristique particulière de l'invention, la surface vitrée comprend le pavillon du véhicule.

Selon un mode de réalisation particulier de l'invention, le dispositif s'étend dans un espace intérieur fermé, défini par deux panneaux superposés et solidarisés l'un à l'autre, formant le pavillon du véhicule.

L'invention concerne également un pavillon de véhicule automobile composé de deux panneaux superposés et solidarisés l'un à l'autre incluant un dispositif d'occultation selon l'invention.

L'invention concerne encore un véhicule automobile dont au moins une des surfaces vitrées est équipée d'un dispositif d'occultation selon l'invention.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une vue schématique d'un véhicule automobile comprenant un pavillon vitré à double vitrage équipé d'un dispositif d'occultation selon l'invention ;
- les figures 2a et 2b illustrent une vue de détail en coupe du pavillon de toit du véhicule de la figure 1, dans deux positions :
   - lamelles perpendiculaires aux surfaces vitrées (figure 2a) ;
   - lamelles parallèles aux surfaces vitrées (figure 2b) ;
- la figure 3 présente une vue de coupe schématique du pavillon de toit dans trois positions :
   - dispositif d'occultation déployé avec ses lamelles perpendiculaires aux surfaces vitrées (figure 3a) ;
   - dispositif d'occultation déployé avec ses lamelles parallèles aux surfaces vitrées (figure 3b) ;
   - dispositif d'occultation replié (figure 3c) ;
- la figure 4 montre une extrémité d'une lamelle équipée de diodes électroluminescentes (DEL) selon un mode de réalisation de l'invention ;
- la figure 5 présente une section d'une lamelle.

### 7. Description d'un mode de réalisation de l'invention

L'invention repose donc sur une approche nouvelle combinant l'occultation (le store) et l'éclairage, pour fournir de façon simple et efficace des solutions permettant de faire varier l'ambiance à l'intérieur du véhicule, en fonction par exemple des conditions extérieures et/ou des désirs des passagers

### 7.1 Le store

Un store selon l'invention est formé d'une pluralité de lamelles mobiles axialement, selon une approche similaire à celle d'un store vénitien. Il peut être mis en oeuvre en regard de toute surface vitrée, et en particulier d'un toit vitré (pouvant le cas échéant se prolonger sur la lunette arrière).

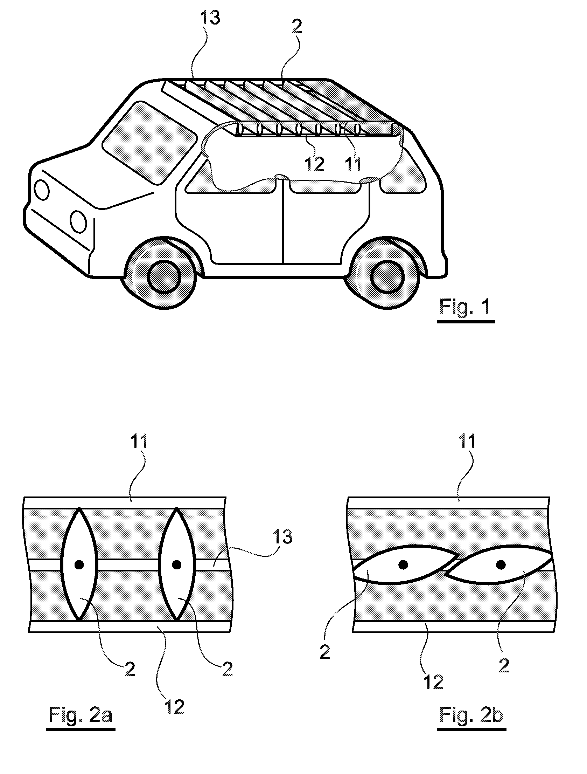

Comme l'illustre la figure 1, l'invention s'applique notamment au cas des pavillons de véhicules formés de deux panneaux vitrés superposés et solidarisés l'un à l'autre. On y voit un panneau vitré extérieur 11 et un panneau vitré intérieur 12. Ces deux panneaux vitrés défmissent un espace intérieur fermé. Un dispositif d'occultation selon l'invention se trouve dans cet espace.

Ces panneaux vitrés peuvent notamment être réalisés en polycarbonates et assemblés pour former un module de toit prêt à être rapporté sur un véhicule automobile.

Comme on peut le voir également sur les figures 2a et 2b, ce dispositif d'occultation est formé de plusieurs lamelles 2 mobiles chacune en rotation.

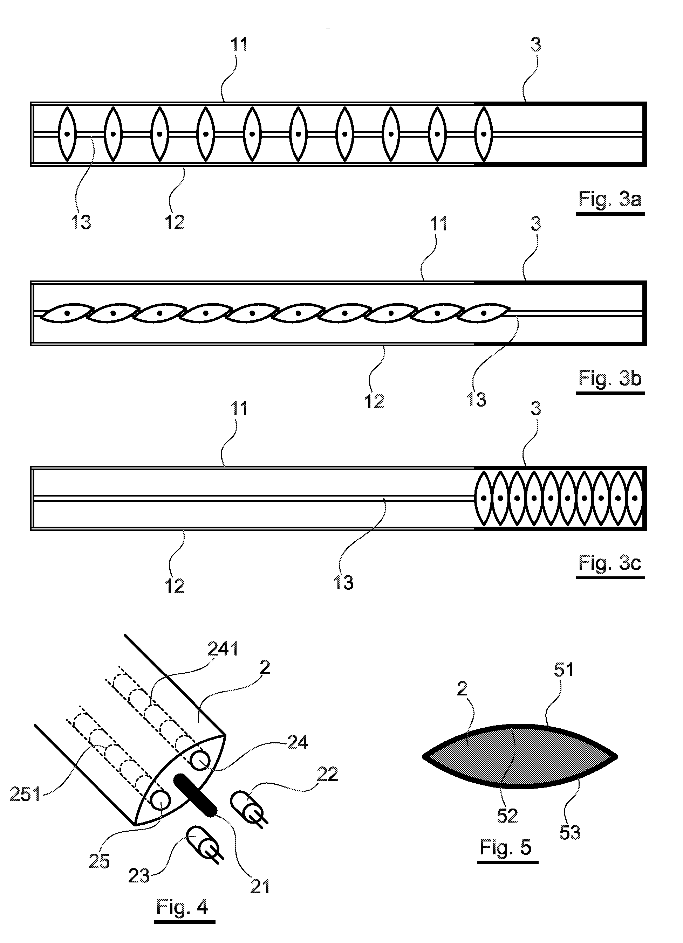

Chacune de ces lamelles est donc mobile autour d'un axe parallèle à la lamelle, ce qui lui permet de prendre la position angulaire choisie et de coulisser dans le rail 13. Préférentiellement toutes les lamelles sont contrôlées par un système commun de contrôle de leur rotation qui les fait tourner simultanément de façon à ce qu'elles soient continuellement parallèles les unes par rapport aux autres. Ainsi, les lamelles pourront, par exemple, prendre une position perpendiculaire aux surfaces vitrées, comme illustré par la figure 3a, dans laquelle elles n'occulteront que peu la lumière, ou au contraire parallèle aux surfaces vitrées, comme illustré par la figure 3b.

Dans cette position, les lamelles étant prévu de préférence pour se chevaucher très légèrement, elles couvrent la quasi-totalité ou la totalité de la surface vitrée.

Les lamelles peuvent également, avantageusement, prendre une ou plusieurs positions intermédiaires, aussi bien en déploiement (occultation partielle du pavillon ; dans ce cas, on peut prévoir que seules certaines lamelles sont mises en oeuvre) qu'en inclinaison (autour de l'axe de la lamelle).

Ce dispositif d'occultation peut également se replier (figure 3b). Pour cela, les lamelles se mettent en position perpendiculaire aux surfaces vitrées et coulissent dans le rail de manière à se resserrer les unes contre les autres.

Avantageusement, un logement de rangement 3 est prévu pour cacher les lamelles dans leur position repliée. Ce logement peut être dans le prolongement des surfaces vitrées, mais il est opaque pour que les lamelles rangées ne soient pas visibles, notamment des passagers du véhicule.

Le dispositif d'occultation peu donc être dans une des positions déployée (figures 3a et 3b) ou dans la position repliée (figure 3c). La manipulation des lamelles entre ces positions, pour les orienter et pour les replier, peut se faire par exemple à l'aide d'un système de câbles ou de tringles reliant toutes les lamelles, par exemple selon le principe du store vénitien. On peut prévoir par exemple un cable reliant les axes des lamelles à chacune de leurs extrémités, pour assurer leur rangement et leur déploiement, et deux câbles reliant les pointes des lamelles pour permettre de contrôler leur position angulaire.

Des câbles électriques, qui peuvent éventuellement être les mêmes que les câbles de manipulation, relient également les lamelles de manière à les alimenter en courant électrique.

Le système de manipulation de ce dispositif d'occultation est de préférence motorisé, les câbles étant manipulés par des moteurs électriques. Ainsi, ce dispositif d'occultation peut être manipulé par l'utilisateur depuis un bouton présent sur le tableau de bord de son véhicule. Des moyens manuels peuvent également être prévus (au moins en cas de panne du système de motorisation).

### 7.2 L'éclairage

Selon l'invention, au moins une des lamelles, et de préférence plusieurs ou toutes, sont équipées de moyens d'éclairage.

Les lamelles sont de préférence au moins en partie en matériau transparent ou translucide, en verre ou en plexiglas par exemple, de manière à laisser passer la lumière qui est produite par le dispositif

Ces moyens d'éclairage peuvent être constitués d'un ou de plusieurs tubes d'éclairage au néon, inclus dans au moins une partie de la longueur de la lamelle.

Selon un des modes de réalisation, ce tube peut être la lamelle elle-même, qui est dans ce cas soit entièrement creuse, soit percée sur au moins une partie de sa longueur.

Selon un autre mode de réalisation, il peut y avoir un ou plusieurs petits tubes d'éclairage inclus dans chaque lamelle.

Selon un autre mode de réalisation, illustré par la figure 4, chacune des lamelles est équipée d'une ou de plusieurs diodes électroluminescentes (DEL) 22, placées à au moins une de ses extrémités.

Cette DEL 22 est placée à l'extrémité d'une fibre transparente 24 s'étendant sur au moins une partie de la longueur de la lamelle, destiné à conduire la lumière.

Ainsi, la lumière est dirigée par la fibre d'une extrémité à l'autre de la lamelle.

Sur la surface de cette fibre, des stries 241 sont destinées à diffuser la lumière passant dans la fibre en la redirigeant sensiblement perpendiculairement à l'axe de la lamelle.

L'utilisation d'une DEL et d'une telle fibre striée permet d'obtenir un bon éclairage, tout en conservant une faible consommation. En effet, une telle diode nécessite peu d'énergie. Bien sûr, d'autres types de source lumineuse peuvent également être utilisés.

La fibre transparente est avantageusement en matière plastique, par exemple en polycarbonate. Elle est ainsi facile à former (la lumière suit l'axe de la fibre, même si celle-ci n'est pas rectiligne) et à travailler. Elle peut également être en verre ou en matériau similaire. Selon certaines variantes, on peut prévoir qu'elle soit teintée, légèrement opaque ou translucide, en fonction des effets souhaités.

Sur une même lamelle, on pourra trouver une ou plusieurs fibres transparentes. Ainsi, la figure 4 présente le cas d'une lamelle ayant deux DEL 22 et 23 qui éclairent deux fibres 24 et 25, montées dans l'épaisseur de la lamelle. Ces fibres sont marquées par des stries 241 et 251 réparties sensiblement régulièrement sur leur longueur.

Les stries peuvent être réparties différemment sur la longueur de la fibre. On peut par exemple imaginer qu'il y ait plus de stries au niveau d'une partie des lamelles pour donner l'impression que la lumière vient de cette zone.

Elles peuvent également être espacées lorsqu'elles sont près de la source lumineuse, et de plus en plus rapprochées en s'en éloignant. Cela permet de conserver sensiblement la même intensité lumineuse tout au long de la lamelle.

Selon d'autres approches, les différentes stries peuvent permettre, par leurs espacements et/ou par leurs tailles, de moduler la lumière, créant ainsi des effets lumineux particuliers.

La fonction éclairante de la lamelle est indépendante de sa fonction d'occultation. La lamelle peut donc être éclairante quelle que soit sa position.

Pour obtenir des ambiances lumineuses variées dans le véhicule, les deux faces de chaque lamelle peuvent être différentes.

Par exemple, sur la section de lamelle représentée sur la figure 5, l'une des surfaces intérieure 52 de la lamelle 2 peut être réfléchissante, de manière à renvoyer vers le bas la lumière émise par la lamelle. On peut ainsi profiter mieux dans le véhicule de la lumière émise et permettre, par exemple, d'éclairer l'intérieur du véhicule sans éclairer l'extérieur.

La surface extérieure 51 de la lamelle qui correspond à cette surface intérieur réfléchissante est alors opaque, ce qui peut permettre d'occulter la lumière venant de l'extérieur.

La surface 53 peut être un revêtement translucide coloré. Ainsi, la lumière émise par la lamelle sera une lumière colorée.

La surface 53 peut également présenter un aspect dépoli, pour diffuser la lumière de façon plus douce.

Selon un autre mode de réalisation, les effets de couleur peuvent se faire, par exemple, par coloration de l'intérieur du tube de verre incluant la diode, ou par l'utilisation d'une diode colorée. On peut également imaginer un effet de dégradé si on met aux deux extrémités de la même lamelle des DEL de couleurs différentes.

Le dispositif peut également inclure des lamelles émettant de la lumière de plusieurs couleurs, pouvant s'allumer indépendamment et/ou conjointement. Il peut encore inclure un système de variateur permettant d'allumer de façon progressive les lamelles.

On pourra donc ainsi, dans le véhicule, définir une très grande variété d'ambiances lumineuses, selon que le dispositif est déployé ou replié, selon l'orientation de ses lamelles, et selon l'allumage, ou non, de toutes ou de certaines de ses lamelles.

L'Homme du Métier pourra imaginer de nombreuses variantes combinant les lumières naturelles et artificielles pour élargir encore cette palette d'ambiances.

## Revendications

1. Dispositif d'occultation d'une surface vitrée d'un véhicule automobile, ledit dispositif comprenant une pluralité de lamelles,
**caractérisé en ce qu'**au moins une desdites lamelles de ce dispositif d'occultation est équipée de moyens d'éclairage.

2. Dispositif d'occultation selon la revendication 1, **caractérisé en ce que** chacune desdites lamelles est mobiles en rotation entre au moins deux positions autour d'un axe parallèle à ladite lamelle, de façon à définir au moins trois types d'ambiances :
- occultation faible avec les lamelles perpendiculaire à la direction de la surface vitrée, laissant passer une grande partie de la lumière ;
- occultation forte avec les lamelles parallèles à la direction de la surface vitrée, occultant la plus grande partie de la lumière ;
- éclairage de l'habitacle à l'aide desdits moyens d'éclairage.

3. Dispositif d'occultation selon l'une quelconque des revendications 1 et 2, **caractérisé en ce que** au moins une desdites lamelles comprend des moyens pour atténuer, répartir, diffuser, orienter, et/ou moduler la lumière produite par lesdits moyens d'éclairage.

4. Dispositif d'occultation selon l'une quelconque des revendications 1 à 3, **caractérisé en ce que** lesdites lamelles peuvent être éclairantes dans toutes leurs positions.

5. Dispositif d'occultation selon l'une quelconque des revendications précédentes, **caractérisé en ce que** lesdits moyens d'éclairage sont montés à l'intérieur de ladite lamelle.

6. Dispositif d'occultation selon l'une quelconque des revendications précédentes, **caractérisé en ce que** lesdites lamelles sont au moins en partie en matériaux transparents ou translucides.

7. Dispositif d'occultation selon l'une quelconque des revendications précédentes, **caractérisé en ce que** lesdits moyens d'éclairage comprennent au moins une diode électroluminescente.

8. Dispositif d'occultation selon la revendication 7, **caractérisé en ce que** la ou lesdites diode(s) électroluminescente(s) sont situées à au moins une extrémité d'au moins une lamelle.

9. Dispositif d'occultation selon la revendication 8, **caractérisé en ce que** au moins une lamelle inclus un tube transparent destiné à conduire la lumière le long de ladite lamelle.

10. Dispositif d'occultation selon l'une quelconque des revendications précédentes, **caractérisé en ce que** lesdits moyens d'éclairage comprennent au moins un tube d'éclairage au néon, inclus dans au moins une partie de la longueur de la lamelle.

11. Dispositif d'occultation selon l'une quelconque des revendications précédentes, **caractérisé en ce que** ladite lamelle et/ou ledit tube transparent présentent des stries, dirigeant une partie de la lumière sensiblement perpendiculairement à l'axe de la lamelle.

12. Dispositif d'occultation selon l'une quelconque des revendications précédente, **caractérisé en ce que** ledit dispositif peut prendre au moins deux positions, une position repliée et une position déployée.

13. Dispositif d'occultation selon la revendication 12, **caractérisé en ce qu'**un logement de rangement est prévu pour cacher lesdites lamelles dans ladite position repliée.

14. Dispositif d'occultation selon l'une quelconque des revendications précédentes, **caractérisé en ce que** chacune des deux faces d'au moins une desdites lamelles transmettent ou réfléchissent différemment la lumière desdits moyens d'éclairages, grâce à des états de surfaces différents.

15. Dispositif d'occultation selon la revendication 14, **caractérisé en ce que** lesdits états de surface différents incluent une coloration différente de chacune des faces internes et /ou externe de la lamelle, de façon à colorer la lumière transmise.

16. Dispositif d'occultation selon l'une quelconque des revendications 14 ou 15, **caractérisé en ce que** lesdits états de surface différents incluent une quantité différente de stries sur les deux surfaces de la lamelle, ou une disposition différente de ces stries.

17. Dispositif d'occultation selon l'une quelconque des revendications précédentes, **caractérisé en ce que** ladite surface vitrée comprend le pavillon dudit véhicule.

18. Dispositif d'occultation selon l'une quelconque des revendications précédentes, **caractérisé en ce qu'**il s'étend dans un espace intérieur fermé, défini par deux panneaux superposés et solidarisés l'un à l'autre, formant ledit pavillon du véhicule.

19. Pavillon de véhicule automobile composé de deux panneaux superposés et solidarisés l'un à l'autre, **caractérisé en ce qu'**il inclut un dispositif d'occultation qui comprend une pluralité de lamelles, au moins une desdites lamelles de ce dispositif d'occultation étant équipée de moyens d'éclairage.

20. Véhicule automobile **caractérisé en ce qu'**une de ses surfaces vitrées est équipée d'un dispositif d'occultation qui comprend une pluralité de lamelles, au moins une desdites lamelles de ce dispositif d'occultation étant équipée de moyens d'éclairage.
